(19) Europäisches Patentamt
European Patent Office
Office européen des brevets

(11) **EP 4 779 352 A1**

(12) **EUROPEAN PATENT APPLICATION**
published in accordance with Art. 153(4) EPC

(43) Date of publication:
**22.07.2026 Bulletin 2026/30**

(21) Application number: **23944529.9**

(22) Date of filing: **13.09.2023**

(51) International Patent Classification (IPC):
**G01S 7/03** (2006.01)    **H01Q 1/42** (2006.01)

(52) Cooperative Patent Classification (CPC):
**G01S 7/03; H01Q 1/42**

(86) International application number:
**PCT/JP2023/033455**

(87) International publication number:
**WO 2025/057348 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Resonac Corporation
Tokyo 105-7325 (JP)**

(72) Inventor: **MORIHARA, Masumi
Tagawa-shi, Fukuoka 8250005 (JP)**

(74) Representative: **Hoffmann Eitle
Patent- und Rechtsanwälte PartmbB
Arabellastraße 30
81925 München (DE)**

(54) **RADIO WAVE TRANSMISSION MEMBER, METHOD FOR MANUFACTURING RADIO WAVE TRANSMISSION MEMBER, AUTOMOBILE COMPONENT, EMBLEM, AND OBJECT DETECTION STRUCTURE**

(57)    A radio wave transmissive member, including an outer layer, an intermediate layer and an inner layer in this order, the radio wave transmissive member having a region in which X1, as a total thickness of the outer layer and the inner layer in a transmission direction of a radio wave, satisfies the following Formula (1) and Formula (3), and X2, as a thickness of the intermediate layer in a transmission direction of the radio wave, satisfies the following Formula (2) and Formula (3):

Formula (1): $Z - 0.6 \text{ mm} \leq X1 \leq Z + 0.6 \text{ mm}$

Formula (2): $Z - 0.3 \text{ mm} \leq X2 \leq Z + 0.3 \text{ mm}$

Formula (3): $Z = \lambda \div \sqrt{\varepsilon_r} \times 0.5 \times Y$

wherein, in the Formulas, $\lambda$ represents a wavelength in vacuum of the radio wave, $\varepsilon_r$ represents a relative permittivity of each layer at a frequency of the radio wave, and Y represents an integer of 1 or more.

FIG. 1

EP 4 779 352 A1

**Description**

Technical Field

The present disclosure relates to a radio wave transmissive member, a method of producing a radio wave transmissive member, an automobile component, an emblem and an object detection structure.

Background Art

There have been remarkable improvements in safety systems for automobiles of recent years. For example, automatic collision-avoidance systems have become standard equipment for automobiles.
An automatic collision-avoidance system is a system that functions to brake automatically based on the image data, which is obtained from a car camera, and the information of relative distance between a car body and an object, which is obtained by a radio-wave transceiver, such as a millimeter-wave transceiver.
The radio-wave transceiver of an automatic collision-avoidance system is preferably disposed at the center of a front of a car body. Generally, an emblem is disposed at the center of a front of a car body. Therefore, the radio-wave transceiver is preferably disposed behind an emblem of a car body.
Emblems for automobiles generally have, on a substrate made of resin or the like, a metal layer for expressing a metallic sheen. For example, Patent Document 1 and Patent Document 2 disclose a structure having a metallic layer that is formed on a substrate by silver mirror reaction, as an emblem that has a metallic sheen and is transmissive to radio waves.

Patent Document 1: Japanese Patent Application Laid-Open No. 2003-019765
Patent Document 2: Japanese Patent Application Laid-Open No. 2019-177311

Summary of the Invention

Problem to be Solved by the Invention

From the viewpoint of securing sufficient performances of an automatic collision-avoidance system, it is desired to suppress the attenuation of radio waves passing through an emblem as much as possible.
In light of the foregoing, the present disclosure aims to provide a radio wave-transmissive member, a method of producing a radio wave-transmissive member, an automobile component, an emblem, and an object detection structure, in which transmission attenuation of radio waves are suppressed.

Means for Solving the Problem

The means for solving the forging problem includes the following embodiments.

<1> A radio wave transmissive member, including an outer layer, an intermediate layer and an inner layer in this order,

the radio wave transmissive member having a region in which X1, as a total thickness of the outer layer and the inner layer in a transmission direction of a radio wave, satisfies the following Formula (1) and Formula (3), and X2, as a thickness of the intermediate layer in a transmission direction of the radio wave, satisfies the following Formula (2) and Formula (3):

$$\text{Formula (1): } Z - 0.6 \text{ mm} \leq X1 \leq Z + 0.6 \text{ mm}$$

$$\text{Formula (2): } Z - 0.3 \text{ mm} \leq X2 \leq Z + 0.3 \text{ mm}$$

$$\text{Formula (3): } Z = \lambda \div \sqrt{\varepsilon_r} \times 0.5 \times Y$$

wherein, in the Formulas, $\lambda$ represents a wavelength in vacuum of the radio wave, $\varepsilon_r$ represents a relative permittivity of each layer at a frequency of the radio wave, and Y represents an integer of 1 or more.

<2> The radio wave transmissive member according to <1>, wherein the intermediate layer is an air layer.
<3> The radio wave transmissive member according to <1> or <2>, wherein each of the outer layer and the inner layer is a layer comprising a resin.

<4> The radio wave transmissive member according to any one of <1> to <3>, further including a metal layer that is transmissive to the radio wave.

<5> The radio wave transmissive member according to claim 4, wherein the metal layer is disposed between the outer layer and the intermediate layer, or between the inner layer and the intermediate layer.

<6> The radio wave transmissive member according to any one of <1> to <5>, being for transmission of a radio wave with a frequency of from 20 GHz to 300 GHz.

<7> A method of producing a radio wave transmissive member, including an outer layer, an intermediate layer and an inner layer in this order,

the method including determining thicknesses of the outer layer, the intermediate layer and the inner layer such that X1, as a total thickness of the outer layer and the inner layer in a transmission direction of a radio wave, satisfies the following Formula (1) and Formula (3), and X2, as a thickness of the intermediate layer in a transmission direction of the radio wave, satisfies the following Formula (2) and Formula (3):

$$\text{Formula (1): } Z - 0.6 \text{ mm} \leq X1 \leq Z + 0.6 \text{ mm}$$

$$\text{Formula (2): } Z - 0.3 \text{ mm} \leq X2 \leq Z + 0.3 \text{ mm}$$

$$\text{Formula (3): } Z = \lambda \div \sqrt{\varepsilon_r} \times 0.5 \times Y$$

wherein, in the Formulas, $\lambda$ represents a wavelength in vacuum of the radio wave, $\varepsilon_r$ represents a relative permittivity of each layer at a frequency of the radio wave, and Y represents an integer of 1 or more.

<8> An automobile component, including the radio wave transmissive member according to any one of <1> to <7>.

<9> An emblem, including the radio wave transmissive member according to any one of <1> to <7>.

<10> An object detection structure, including the radio wave transmissive member according to any one of <1> to <7>, and a device that radiates a radio wave toward the radio wave transmissive member.

Effect of the Invention

According to the present disclosure, a radio wave transmissive member, a method of producing a radio wave transmissive member, an automobile component, an emblem, and an object detection structure, in which transmission attenuation of radio waves are suppressed, are provided.

Brief Explanation of the Drawings

FIG. 1 is a schematic sectional view illustrating an exemplary configuration of the radio wave transmissive member.

FIG. 2 is a schematic view illustrating exemplary automobile components including the radio wave transmissive member.

FIG. 3 is a schematic view illustrating exemplary automobile components including the radio wave transmissive member.

FIG. 4 is a schematic view illustrating exemplary automobile components including the radio wave transmissive member.

Embodiments for Implementing the Invention

Embodiments for carrying out the present disclosure will now be described in detail. However, the present disclosure is in no way limited to the following embodiments.

In the following embodiments, constituent elements (including element steps and the like) of the embodiments are not essential, unless otherwise specified. Likewise, numerical values and ranges thereof are not intended to restrict the invention.

In the present disclosure, any numerical range described using the expression "from * to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, particles corresponding to each component may include plural kinds of particles.

In the present disclosure, the term "layer" or "film" includes, when a region where a layer or a film is present is observed, a case in which a layer or a film is formed at a portion of the region, in addition to a case in which a layer or a film is formed at an entire region.

In the present disclosure, the term "(meth)acryl" is used to refer to both acryl and methacryl.

<Radio Wave Transmissive Member>

The radio wave transmissive member of the present disclosure is a radio wave transmissive member, including an outer layer, an intermediate layer and an inner layer in this order,

the radio wave transmissive member having a region in which X1, as a total thickness of the outer layer and the inner layer in a transmission direction of a radio wave, satisfies the following Formula (1) and Formula (3), and X2, as a thickness of the intermediate layer in a transmission direction of the radio wave, satisfies the following Formula (2) and Formula (3):

$$\text{Formula (1): } Z - 0.6 \text{ mm} \leq X1 \leq Z + 0.6 \text{ mm}$$

$$\text{Formula (2): } Z - 0.3 \text{ mm} \leq X2 \leq Z + 0.3 \text{ mm}$$

$$\text{Formula (3): } Z = \lambda \div \sqrt{\varepsilon_r} \times 0.5 \times Y$$

wherein, in the Formulas, $\lambda$ represents a wavelength in vacuum of the radio wave, $\varepsilon_r$ represents a relative permittivity of each layer at a frequency of the radio wave, and Y represents an integer of 1 or more.

The radio wave transmissive member of the present disclosure has a configuration in which an outer layer, an intermediate layer and an inner layer are layered in this order, for the reason of securing strength, molding process or the like. Therefore, when the layers are formed from different materials, reflection of radio waves may occur at a border of the layers, thereby increasing the amount of attenuation of radio waves passing through the radio wave transmissive member.

In the radio wave transmissive member of the present disclosure, the configuration thereof is designed to have a region in which X1 as the total thickness of the outer layer and the inner layer and X2 as the thickness of the intermediate layer satisfy Formulas (1) to (3), and whereby the attenuation of radio waves passing through the radio wave transmissive member is effectively suppressed.

Further, by designing the radio wave transmissive member of the present disclosure such that X1 as the total thickness of the outer layer and the inner layer satisfies Formula (1) and Formula (3), it is possible to suppress the attenuation of radio waves in an effective manner without the need to design each of the outer layer and the inner layer to satisfy Formula (1) and Formula (3), respectively. Therefore, for example, it is possible to further improve the transmissivity with respect to radio waves by reducing the thickness of each of the outer layer and the inner layer, respectively.

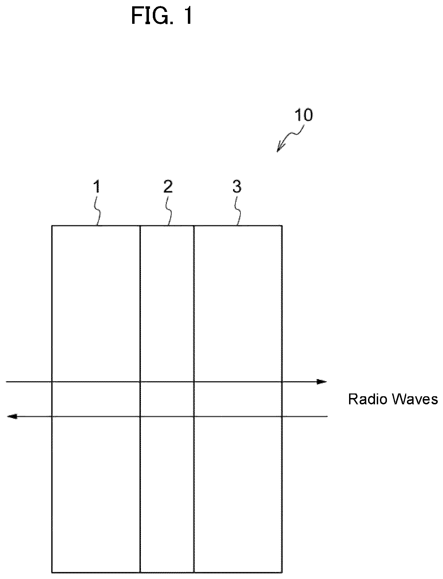

FIG. 1 is a schematic sectional view illustrating an exemplary configuration of the radio wave transmissive member.

The radio wave transmissive member 10, shown in FIG. 1, has an outer layer 1, an intermediate layer 2 and an inner layer 3 in this order. The radio wave transmissive member 10 is transmissive to radio waves radiated by a device that radiates the radio waves (not shown), and also transmissive to radio waves reflected at an object.

The outer layer 1 is disposed at a side opposite to the device that radiates radio waves toward the radio wave transmissive member 10. The inner layer 3 is disposed at a side facing the device that radiates radio waves toward the radio wave transmissive member 10.

The frequency of radio waves passing through the radio wave transmissive member is not particularly limited. For example, the radio waves may have a frequency in vacuum of from 20 GHz to 300 GHz (also known as millimeter waves).

When the radio wave transmissive member is applied to an automatic collision-avoidance system of an automobile, the radio waves may be those with a frequency of from 24 GHz to 79 GHz, for example, radio waves with a frequency of 24 GHz, 77 GHz or 79 GHz, which are commonly used in an automatic collision-avoidance system. The wavelengths in vacuum of these radio waves are 12.49135 mm (24 GHz), 3.893409 mm (77 GHz) and 3.794841 mm (79 GHz).

The Y in the Formulas is not particularly limited as long as it is an integer of 1 or more, and may be determined depending on the desired configuration, strength or the like of the radio wave transmissive member. For example, the range of Y may be from 1 to 13.

From the viewpoint of suppressing the amount of attenuation of radio waves passing through the radio wave transmissive member in a more effective manner, the difference between Z and X1 as the total thickness of the outer layer and the inner layer in a transmission direction of radio waves is preferably as small as possible. Specifically, X1 as the total thickness of the outer layer and the inner layer in a transmission direction of radio waves preferably satisfies the following Formula (1'), more preferably satisfies the following Formula (1").

$$\text{Formula (1'): } Z - 0.4 \text{ mm} \leq X1 \leq Z + 0.4 \text{ mm}$$

$$\text{Formula (1"): } Z - 0.3 \text{ mm} \leq X1 \leq Z + 0.3 \text{ mm}$$

From the viewpoint of suppressing the amount of attenuation of radio waves passing through the radio wave transmissive member in a more effective manner, the difference between Z and X2 as the thickness of the intermediate layer in a transmission direction of radio waves is preferably as small as possible. Specifically, X2 as the thickness of the intermediate layer in a transmission direction of radio waves preferably satisfies the following Formula (2'), more preferably satisfies the following Formula (2").

$$\text{Formula (2'): } Z - 0.2 \text{ mm} \leq X2 \leq Z + 0.2 \text{ mm}$$

$$\text{Formula (2"): } Z - 0.1 \text{ mm} \leq X2 \leq Z + 0.1 \text{ mm}$$

Table 1 shows the values of Z (Y = 1 to 13, unit: mm) when the radio wave passing through the radio wave transmissive member has a frequency of 77 GHz and a wavelength in vacuum of 3.893409 mm, in cases with a relative permittivity at 77 GHz of 2.574 or a relative permittivity at 77 GHz of 1.0 (i.e., the air), respectively. The values shown in Table 1 are rounded to two decimal places.

Table 1

| Y | Z $\varepsilon_r$=2.574 (mm) | Z $\varepsilon_r$=1.0 (mm) |
|---|---|---|
| 1 | 1.21 | 1.95 |
| 2 | 2.43 | 3.89 |
| 3 | 3.64 | 5.84 |
| 4 | 4.85 | 7.79 |
| 5 | 6.07 | 9.73 |
| 6 | 7.28 | 11.68 |
| 7 | 8.49 | 13.63 |
| 8 | 9.71 | 15.57 |
| 9 | 10.92 | 17.52 |
| 10 | 12.13 | 19.47 |

(continued)

| Y | Z $\varepsilon_r$=2.574 (mm) | Z $\varepsilon_r$=1.0 (mm) |
|---|---|---|
| 11 | 13.35 | 21.41 |
| 12 | 14.56 | 23.36 |
| 13 | 15.77 | 25.31 |

From the viewpoint of achieving a sufficient effect of suppressing the attenuation of radio waves, the proportion of the region, in which X1 as the total thickness of the outer layer and the inner layer in a transmission direction of radio waves and X2 as the thickness of the intermediate layer in a transmission direction of radio waves satisfy Formulas (1) to (3), is preferably 50% or more, more preferably 60% or more, further preferably 70% or more, with respect to the total area of the radio wave transmissive member.

The foregoing proportion is a value based on the area of the radio wave transmissive member observed from the side of the outer layer.

From the viewpoint of a balance between the strength and the radio wave transmissivity, the outer layer and the inner layer are preferably a layer including a resin, respectively.

From the viewpoint of radio wave transmissivity, the intermediate layer is preferably an air layer or a layer including a resin, more preferably an air layer.

When the outer layer, the inner layer or the intermediate layer is a layer including a resin, the relative permittivity thereof may be independently from 2.0 to 3.3, from 2.3 to 2.9, or from 2.5 to 2.8, respectively.

Examples of the resin that may be included in each of the layers that constitute the radio wave transmissive member include thermosetting resins, thermoplastic resins and synthetic rubbers.

Examples of the thermoplastic resins include polyethylene (PE), polypropylene (PP), polycarbonate (PC), polystyrene, polyvinyl chloride, vinyl polymer, polyester, polyamide, acrylonitrile-butadiene-styrene copolymer (ABS resin), (meth)acrylic resin, acrylonitrile-ethylene-propylene-diene-styrene copolymer (AES resin) and thermoplastic elastomers.

Examples of the thermosetting resins include silicone resin, urethane resin, melamine resin, epoxy resin, phenol resin and urea resin.

Example of the synthetic rubbers include ethylene-propylene-diene rubber (EPDM), acrylonitrile-butadiene rubber (NBR), isoprene rubber (IR), butadiene rubber (BR), styrenebutadiene rubber (SBR), chloroprene rubber (CR), silicone rubber and urethane rubber.

Among the foregoing resins, PC, PP, ABS resin, (meth)acrylic resin and AES resin are preferred, and PC, PP and ABS resin are more preferred.

When the outer layer, the intermediate layer or the inner layer is a layer including a resin, the outer layer, the intermediate layer or the inner layer may include a resin alone, or may include a resin and a component other than resin.

Examples of the component other than resin include inorganic particles, colorants, antistatics, and light diffusion particles as mentioned below.

When the outer layer, the intermediate layer or the inner layer includes a resin and a component other than resin, the content of a resin included in the outer layer, the intermediate layer or the inner layer is preferably 60% by mass or more, more preferably 70% by mass or more, further preferably 80% by mass or more, particularly preferably 90% by mass or more. The upper limit of the content of a resin is not particularly limited, as long as it is less than 100% by mass.

The outer layer, the intermediate layer or the inner layer may have a light diffusion feature.

When the outer layer, the intermediate layer or the inner layer has a light diffusion feature, it is possible to cause the radio wave transmissive member to emit light by irradiating the radio wave transmissive member with light. As such, it is possible to achieve various types of expressions using light.

Examples of the method for imparting a light diffusion feature to the outer layer, the intermediate layer or the inner layer include a method of including light diffusion particles therein, a method of forming a concave-convex pattern at a surface thereof, and the like.

The outer layer, the intermediate layer or the inner layer may have a light diffusion feature either at an entire body thereof or at a portion thereof.

Among the foregoing methods, a method of including light diffusion particles is preferred from the viewpoint of productivity.

Examples of the light diffusion particles include acrylic resin particles, silicone resin particles, titanium oxide particles, silica particles, zirconia particles, zinc oxide particles, and alumina particles.

A single kind of light diffusion particles may be used alone, or two or more kinds thereof may be used in combination.

When the outer layer, the intermediate layer or the inner layer includes light diffusion particles, the content of the light diffusion particles is not particularly limited. For example, the content of the light diffusion particles may be from 0.3% by mass to 10% by mass with respect to the entire body of the outer layer, the intermediate layer or the inner layer.

The thicknesses of the outer layer, the intermediate layer and the inner layer are not particularly limited as long as the total thickness of the outer layer and the inner layer and the thickness of the intermediate layer satisfy the conditions of Formulas (1) to (3), and may be determined depending on the purpose or the like of the radio wave transmissive member.

The thickness of the outer layer may be from 1.0 mm to 15.0 mm, from 1.5 mm to 12.0 mm, or from 2.0 mm to 10.0 mm.

The thickness of the intermediate layer may be from 0.1 mm to 6.0 mm, from 0.3 mm to 4.0 mm, or from 0.5 mm to 2.0 mm.

The thickness of the inner layer may be from 1.0 mm to 15.0 mm, from 1.5 mm to 12.0 mm, or from 2.0 mm to 10.0 mm.

The foregoing thicknesses are measured at a region in which X as the thickness of each of the outer layer and the inner layer satisfies the conditions of Formulas (1) to (3), respectively.

In the present disclosure, the thickness of the radio wave transmissive member or the thickness of each layer that constitutes the radio wave transmissive member may be measured by a known method. For example, the thickness may be measured by observing a cross section of the radio wave transmissive member, or may be measured with a microtome or the like.

The radio wave transmissive member may have a metal layer that is transmissive to radio waves. By providing the radio wave transmissive member with a metal layer that is transmissive to radio waves, it is possible to impart a metallic sheen to the radio wave transmissive member.

When the radio wave transmissive member has a metal layer that is transmissive to radio waves, the metal layer is preferably disposed between the outer layer and the intermediate layer or between the inner layer and the intermediate layer.

Examples of the metal layer that is transmissive to radio waves include a film including metal particles. When the metal layer includes metal particles, radio waves can pass through the spaces among the metal particles.

The metal layer may be a metal layer including silver particles. The metal layer including silver particles may be formed by a silver mirror reaction, for example.

Examples of the method for forming a metal layer by a silver mirror reaction include a method of causing, on a substrate, an ammoniacal silver nitrate aqueous solution and a reducing agent aqueous solution to contact each other. In this method, precipitation of silver particles is caused by an oxidation-reduction reaction, whereby a metal layer including silver particles is formed on the substrate.

When a metal layer is provided between the outer layer and the intermediate layer, a member for the outer layer may be used as a substrate. When a metal layer is provided between the inner layer and the intermediate layer, a member for the inner layer may be used as a substrate.

From the viewpoint of radio wave transmissivity, the thickness of the metal layer is preferably 1000 nm or less, more preferably 500 nm or less, further preferably 100 nm or less.

From the viewpoint of imparting a sufficient degree of metallic sheen to the radio wave transmissive member, the thickness of the metal layer is preferably 10 nm or more.

When a metal layer is provided between the outer layer and the intermediate layer, or between the inner layer and the intermediate layer, an undercoat layer may be provided between the metal layer and either the outer layer or the inner layer.

Further, a protection layer may be provided onto the metal layer in order to protect the surface of the metal layer.

Examples of the undercoat layer or the protection layer include a layer including a resin, and examples of the resin include fluorine resin, polyester resin, epoxy resin, melamine resin, silicone resin, acrylic silicone resin, and acrylic urethane resin.

The thickness of the undercoat layer or the protection layer is preferably from 1 μm to 50 μm. When the thickness of the undercoat layer or the protection layer is from 1 μm to 50 μm, it is possible to achieve a sufficient effect of suppressing the attenuation of radio waves by controlling the thicknesses of the outer layer, the intermediate layer and the inner layer.

The type of the radio wave for transmission by the radio wave transmissive member is not particularly limited, and may be millimeter waves, for example. In the present disclosure, the "millimeter wave" refers to a radio wave with a frequency of from 20 GHz to 300 GHz. The radio wave transmissive member of the present disclosure is especially useful for the purpose of reducing the amount of transmission attenuation of millimeter waves.

<Method of Producing Radio Wave Transmissive Member>

The method of producing a radio wave transmissive member of the present disclosure is a method of producing a radio wave transmissive member including an outer layer, an intermediate layer and an inner layer in this order, and the method includes determining thicknesses of the outer layer, the intermediate layer and the inner layer such that X1, as a total thickness of the outer layer and the inner layer in a transmission direction of a radio wave, satisfies the following Formula (1) and Formula (3), and X2, as a thickness of the intermediate layer in a transmission direction of the radio wave, satisfies the following Formula (2) and Formula (3).

$$\text{Formula (1): } Z - 0.6 \text{ mm} \leq X1 \leq Z + 0.6 \text{ mm}$$

$$\text{Formula (2): } Z - 0.3 \text{ mm} \leq X2 \leq Z + 0.3 \text{ mm}$$

$$\text{Formula (3): } Z = \lambda \div \sqrt{\varepsilon_r} \times 0.5 \times Y$$

In the Formulas, $\lambda$ represents a wavelength in vacuum of the radio wave, $\varepsilon_r$ represents a relative permittivity of each layer at a frequency of the radio wave, and Y represents an integer of 1 or more.

According to the method of the present disclosure, it is possible to produce a radio wave transmissive member with a suppressed amount of transmission attenuation of radio waves.

The details and preferred embodiments of the radio wave transmissive member produced by the method of the present disclosure are the same as the details and preferred embodiments of the radio wave transmissive member.

<Automobile Component>

The automobile component of the present disclosure is an automobile component including the foregoing radio wave transmissive member.

The type of the automobile component is not particularly limited, and may be any kind of interior or exterior components for automobiles.

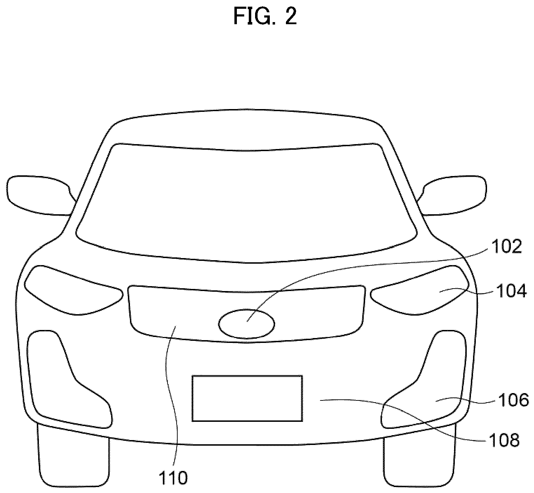

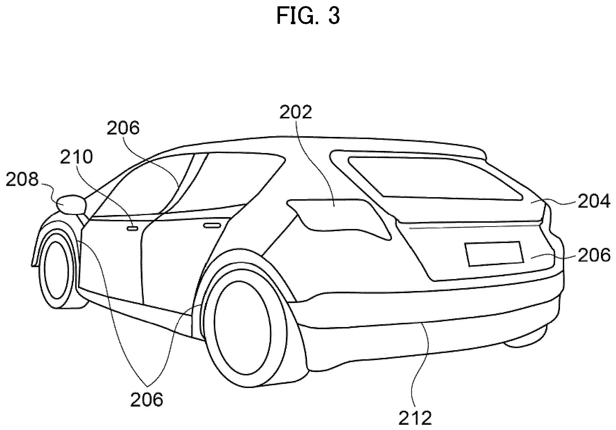

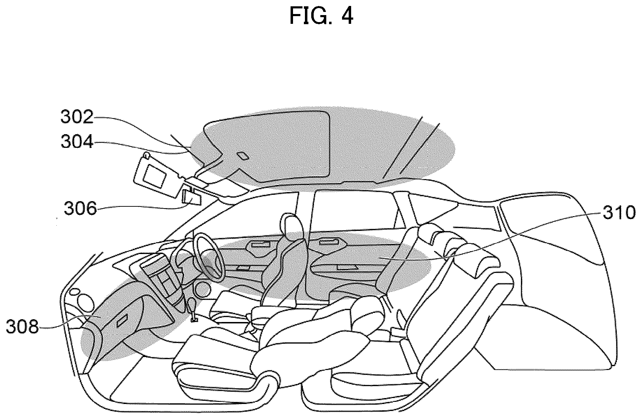

Examples of the automobile component include the components provided at a front portion of an automobile as illustrated in FIG. 2; the components provided at a side-to-rear portion of an automobile as illustrated in FIG. 3; and the components provided at an internal space of an automobile as illustrated in FIG. 4.

Specific examples of the automobile components include an emblem 102, a lamp 104, a garnish 106, a bumper 108 and grill 110, as illustrated in FIG. 2; a lamp 202, a back door 204, a garnish 206, an outer mirror 208, a door outer handle 210 and a bumper 212, as illustrated in FIG. 3; a room lamp 302, a roof garnish 304, a room mirror 306, an instrument panel garnish 308 and a door trim 310, as illustrated in FIG. 4.

The automobile components may have a sensing functionality, such as an obstacle sensor, a human-detecting sensor and a vital sensor.

<Emblem>

The emblem of the present disclosure is an emblem including the foregoing radio wave transmissive member.

The emblem of the present disclosure exhibits a suppressed amount of transmission attenuation of radio waves. Therefore, for example, it is possible to maintain the transmitting-and-receiving performance of a radio wave transceiver in favorable conditions, even if the emblem is disposed at a front side of an automobile at which the radio wave transceiver is located.

The emblem of the present disclosure is disposed at a car body of an automobile such that the outer layer of the radio wave transmissive member is on the outside.

The emblem may have a concave-convex configuration for expressing a character or a logotype at a side of the outer layer.

<Object Detection Structure>

The object detection structure of the present disclosure includes the foregoing radio wave transmissive member, and a device that radiates a radio wave toward the radio wave transmissive member. Since the attenuation of radio waves due to the radio wave transmissive member is suppressed, the object detection structure exhibits an excellent performance for detecting an object.

The objection detection structure of the present disclosure is suitably used for an automatic collision-avoidance system (preferably an automatic collision-avoidance system employing millimeter waves) of automobiles, for example.

Examples

In the following, the present disclosure is explained in further details by referring to the Examples. However, the present disclosure is not limited to the following Examples.

(Preparation of Samples)

Samples of a radio wave transmissive member, consisting of polycarbonate panels with a relative permittivity at 77 GHz of 2.574 as the outer layer and the inner layer and a space (air) between the polycarbonate panels as the intermediate layer, were prepared. The thicknesses of the respective layers were adjusted to the values as shown in Table 2.

(Measurement of Amount of Attenuation of Radio Waves)

The samples were subjected to irradiation with radio waves at a frequency of 77 GHz and a wavelength of 3.893409 mm in vacuum, from a side of the inner layer in a vertical manner with respect to the thickness direction. The amount of attenuation of radio waves was measured by a free space method. The results are shown in Table 2.

(Measurement of Absorptivity and Reflectivity)

The samples were subjected to irradiation with radio waves at a frequency of 77 GHz and a wavelength of 3.893409 mm in vacuum, from a side of the inner layer in a vertical manner with respect to the thickness direction. The absorptivity and the reflectivity of radio waves were measured by a free space method. The results are shown in Table 2.
The smaller the total value of absorptivity and reflectivity of radio waves is, the greater the transmissivity of radio waves is.

Table 2

| Samples | Outer Layer A | | Intermediate Layer B | | Inner Layer C | | A+C | | A+B+C | Amount of Attenuation | Absorptivity D | Reflectivity E | D+E |
|---|---|---|---|---|---|---|---|---|---|---|---|---|---|
| No. | (mm) | X | (mm) | X 2 | (mm) | X | (mm) | X 1 | (mm) | (dB) | (%) | (%) | (%) |
| 1 | 2.93 | NG | 1.88 | OK | 2.91 | NG | 5.84 | OK | 7.72 | -0.50 | 10.7 | 0.2 | 10.9 |
| 2 | 4.85 | OK | 2.02 | OK | 2.02 | NG | 6.87 | OK | 8.89 | -0.75 | 11.8 | 4.1 | 15.9 |
| 3 | 2.92 | NG | 2.03 | OK | 7.98 | NG | 10.90 | OK | 12.93 | -1.70 | 21.7 | 10.6 | 32.3 |
| 4 | 8.03 | NG | 2.05 | OK | 8.02 | NG | 16.05 | OK | 18.10 | -2.34 | 25.8 | 15.9 | 41.7 |
| 5 | 4.82 | OK | 2.00 | OK | 4.82 | OK | 9.64 | OK | 11.64 | -0.98 | 17.8 | 2.5 | 20.3 |
| 6 | 4.83 | OK | 2.21 | OK | 5.88 | OK | 10.71 | OK | 12.92 | -1.07 | 21.1 | 0.7 | 21.8 |
| 7 | 5.83 | OK | 2.14 | OK | 5.83 | OK | 11.66 | OK | 13.80 | -1.30 | 21.3 | 4.5 | 25.8 |
| 8 | 2.02 | NG | 0.51 | NG | 2.02 | NG | 4.04 | OK | 4.55 | -3.18 | 4.1 | 47.8 | 51.9 |
| 9 | 2.96 | NG | 0.43 | NG | 2.96 | NG | 5.92 | OK | 6.35 | -2.64 | 9.1 | 36.5 | 45.6 |
| 10 | 2.89 | NG | 2.86 | NG | 2.87 | NG | 5.76 | OK | 8.62 | -3.60 | 7.8 | 48.5 | 56.3 |
| 11 | 2.88 | NG | 0.54 | NG | 8.00 | NG | 10.88 | OK | 11.42 | -3.09 | 18.9 | 32.0 | 50.9 |
| 12 | 2.93 | NG | 2.92 | NG | 8.05 | NG | 10.98 | OK | 13.90 | -2.76 | 25.4 | 21.7 | 47.1 |
| 13 | 8.02 | NG | 0.51 | NG | 8.02 | NG | 16.04 | OK | 16.55 | -2.91 | 29.5 | 19.4 | 48.9 |
| 14 | 8.01 | NG | 3.12 | NG | 8.04 | NG | 16.05 | OK | 19.17 | -2.27 | 35.5 | 5.2 | 40.7 |

In the column referred to as "X1" in the table, the "OK" indicates that X1 as the total thickness of the outer layer and the inner layer satisfies the conditions of Formula (1) and Formula (3), and the "NG" indicates that X1 as the total thickness of the outer layer and the inner layer does not satisfy the conditions of Formula (1) and Formula (3).

In the column referred to as "X2" in the table, the "OK" indicates that X2 as the thickness of the intermediate layer satisfies the conditions of Formula (2) and Formula (3), and the "NG" indicates that X2 as the thickness of the intermediate layer does not satisfy the conditions of Formula (2) and Formula (3).

In the column referred to as "X" in the table, the "OK" indicates that X as the thickness of the outer layer or the inner layer satisfies the conditions of Formula (2) and Formula (3) (wherein X2 is regarded as X in Formula (2)), and the "NG" indicates that X as the thickness of the outer layer or the inner layer does not satisfy the conditions of Formula (2) and Formula (3) (wherein X2 is regarded as X in Formula (2)).

As shown in Table 2, Samples 1 to 7, in which X1 as the total thickness of the outer layer and the inner layer satisfies Formula (1) and Formula (3) and X2 as the thickness of the intermediate layer satisfies Formula (2) and Formula (3), exhibit a suppressed amount of attenuation of radio waves as compared with Samples 8 to 14, in which the layers do not satisfy the foregoing conditions.

In Samples 1 to 7, Sample 1, in which the outer layer alone or the inner layer alone does not satisfy Formula (1) and Formula (3), exhibits a suppressed amount of attenuation of radio waves as compared with Samples 5, 6 and 7, in which the outer layer alone and the inner layer alone satisfy Formula (1) and Formula (3), respectively. The reason for this is thought to be that the total thickness of Sample 1 is less than that of Samples 5, 6 and 7, and therefore Sample 1 exhibits a greater transmissivity for the radio waves than Samples 5, 6 and 7.

**Claims**

1. A radio wave transmissive member, comprising an outer layer, an intermediate layer and an inner layer in this order,

   the radio wave transmissive member having a region in which X1, as a total thickness of the outer layer and the inner layer in a transmission direction of a radio wave, satisfies the following Formula (1) and Formula (3), and X2, as a thickness of the intermediate layer in a transmission direction of the radio wave, satisfies the following Formula (2) and Formula (3):

$$\text{Formula (1): } Z - 0.6 \text{ mm} \leq X1 \leq Z + 0.6 \text{ mm}$$

$$\text{Formula (2): } Z - 0.3 \text{ mm} \leq X2 \leq Z + 0.3 \text{ mm}$$

$$\text{Formula (3): } Z = \lambda \div \sqrt{\varepsilon_r} \times 0.5 \times Y$$

   wherein, in the Formulas, $\lambda$ represents a wavelength in vacuum of the radio wave, $\varepsilon_r$ represents a relative permittivity of each layer at a frequency of the radio wave, and Y represents an integer of 1 or more.

2. The radio wave transmissive member according to claim 1, wherein the intermediate layer is an air layer.

3. The radio wave transmissive member according to claim 1, wherein each of the outer layer and the inner layer is a layer comprising a resin.

4. The radio wave transmissive member according to claim 1, further comprising a metal layer that is transmissive to the radio wave.

5. The radio wave transmissive member according to claim 4, wherein the metal layer is disposed between the outer layer and the intermediate layer, or between the inner layer and the intermediate layer.

6. The radio wave transmissive member according to claim 1, being for transmission of a radio wave with a frequency of from 20 GHz to 300 GHz.

7. A method of producing a radio wave transmissive member, comprising an outer layer, an intermediate layer and an inner layer in this order,

the method comprising determining thicknesses of the outer layer, the intermediate layer and the inner layer such that X1, as a total thickness of the outer layer and the inner layer in a transmission direction of a radio wave, satisfies the following Formula (1) and Formula (3), and X2, as a thickness of the intermediate layer in a transmission direction of the radio wave, satisfies the following Formula (2) and Formula (3):

$$\text{Formula (1): } Z - 0.6 \text{ mm} \leq X1 \leq Z + 0.6 \text{ mm}$$

$$\text{Formula (2): } Z - 0.3 \text{ mm} \leq X2 \leq Z + 0.3 \text{ mm}$$

$$\text{Formula (3): } Z = \lambda \div \sqrt{\varepsilon_r} \times 0.5 \times Y$$

wherein, in the Formulas, $\lambda$ represents a wavelength in vacuum of the radio wave, $\varepsilon_r$ represents a relative permittivity of each layer at a frequency of the radio wave, and Y represents an integer of 1 or more.

8. An automobile component, comprising the radio wave transmissive member according to any one of claim 1 to claim 7.

9. An emblem, comprising the radio wave transmissive member according to any one of claim 1 to claim 7.

10. An object detection structure, comprising the radio wave transmissive member according to any one of claim 1 to claim 7, and a device that radiates a radio wave toward the radio wave transmissive member.

FIG. 1

Radio Waves

FIG. 2

FIG. 3

FIG. 4

302

304

306

308

310

## INTERNATIONAL SEARCH REPORT

| International application No. |
| --- |
| **PCT/JP2023/033455** |

**A.     CLASSIFICATION OF SUBJECT MATTER**

*G01S 7/03*(2006.01)i; *H01Q 1/42*(2006.01)i
FI:     G01S7/03 246; H01Q1/42

According to International Patent Classification (IPC) or to both national classification and IPC

**B.     FIELDS SEARCHED**

Minimum documentation searched (classification system followed by classification symbols)

G01S7/00-7/42; G01S13/00-13/95; H01Q1/42; B60R13/00-13/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| X | WO 2020/065714 A1 (MITSUBISHI ELECTRIC CORPORATION) 02 April 2020 (2020-04-02) | 1-3, 6-10 |
| | claim 1, paragraphs [0017]-[0026], [0034], fig. 3-4 | |
| Y | | 1-10 |
| Y | JP 2006-140956 A (ANRITSU CORP.) 01 June 2006 (2006-06-01) | 1-10 |
| | claim 2, paragraphs [0018]-[0050], fig. 1-9 | |
| Y | JP 2011-093378 A (SAKAE RIKEN KOGYO CO., LTD.) 12 May 2011 (2011-05-12) | 4-5 |
| | paragraphs [0026]-[0027], fig. 1, 4 | |
| A | JP 2016-006411 A (PANASONIC INTELLECTUAL PROPERTY MANAGEMENT CO., LTD.) 14 January 2016 (2016-01-14) | 1-10 |
| | claims, paragraphs [0015]-[0052], fig. 1-2 | |
| A | JP 2019-007776 A (TOYODA GOSEI CO., LTD.) 17 January 2019 (2019-01-17) | 1-10 |
| | claims, paragraphs [0047]-[0054], [0062]-[0084], fig. 4, 6-9 | |
| A | JP 2023-528670 A (VALEO VISION) 05 July 2023 (2023-07-05) | 1-10 |
| | entire text, all drawings | |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 October 2023** | **31 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/033455**

### C. DOCUMENTS CONSIDERED TO BE RELEVANT

| Category* | Citation of document, with indication, where appropriate, of the relevant passages | Relevant to claim No. |
|---|---|---|
| A | US 2022/0155409 A1 (COMPAGNIE PLASTIC OMNIUM) 19 May 2022 (2022-05-19)<br>entire text, all drawings | 1-10 |

Form PCT/ISA/210 (second sheet) (January 2015)

## INTERNATIONAL SEARCH REPORT
### Information on patent family members

International application No.

**PCT/JP2023/033455**

| Patent document cited in search report | | | Publication date (day/month/year) | Patent family member(s) | | | Publication date (day/month/year) |
|---|---|---|---|---|---|---|---|
| WO | 2020/065714 | A1 | 02 April 2020 | US 2021/0210846 A1 claim 1, paragraphs [0028]-[0036], [0043], fig. 3-4 | | | |
| JP | 2006-140956 | A | 01 June 2006 | (Family: none) | | | |
| JP | 2011-093378 | A | 12 May 2011 | (Family: none) | | | |
| JP | 2016-006411 | A | 14 January 2016 | US 2015/0349414 A1 claims, paragraphs [0025]-[0063], fig. 1-2 | | | |
| JP | 2019-007776 | A | 17 January 2019 | (Family: none) | | | |
| JP | 2023-528670 | A | 05 July 2023 | FR 3111197 A1 entire text, all drawings CN 115698763 A | | | |
| US | 2022/0155409 | A1 | 19 May 2022 | WO 2020/173965 A1 entire text, all drawings FR 3093241 A1 CN 113632319 A | | | |

Form PCT/ISA/210 (patent family annex) (January 2015)

**REFERENCES CITED IN THE DESCRIPTION**

**Patent documents cited in the description**

- JP 2003019765 A
- JP 2019177311 A